# EUROPÄISCHE PATENTSCHRIFT

(11) **EP 0 635 642 B1**
(45) Veröffentlichungstag und Bekanntmachung des Hinweises auf die Patenterteilung: **05.03.1997**
(21) Anmeldenummer: 94115947.7
(22) Anmeldetag: 14.11.1991
(51) Int. Cl.: F04D 25/06, H02K 7/14

(54) **Gebläseaggregat**
Blower unit
Unité ventilateur

(30) Priorität: 23.11.1990 DE 4037229
(43) Veröffentlichungstag der Anmeldung: 25.01.1995
(62) Teilanmeldung aus: 91202954.3
(73) Patentinhaber: Philips Patentverwaltung GmbH, 22335 Hamburg (DE); Philips Electronics N.V., 5621 BA Eindhoven (NL)
(72) Erfinder: Bolte, Dr.-Ing. Ekkehard, D-20097 Hamburg (DE)
(74) Vertreter: von Laue, Hanns-Ulrich, Dipl.-Ing.

(56) Entgegenhaltungen:
- DE-A- 1 428 061
- DE-A- 2 718 428
- GB-A- 1 421 770
- US-A- 2 947 467
- PATENT ABSTRACTS OF JAPAN vol. 9, no. 25 (M-355) (1748) 2. Februar 1985 & JP-A-59 170 490 (MATSUSHITA) 26. September 1984

## Beschreibung

Die Erfindung bezieht sich auf ein Gebläseaggregat zur Verwendung in einem Staubsauger.

Aus der CH-PS 612 736 ist ein Kleinstlüfter bekannt, bei dem ein Lüfterrad mit in Radialrichtung wirkenden Schaufeln versehen ist. Außerdem ist das Lüfterrad am Luftspalt mit Dauermagneten ausgerüstet, die in Umfangsrichtung längs des Luftspaltes Pole wechselnder Polarität ausbilden. Den in einer Radialebene angeordneten dauermagnetischen Polen des Läufers liegen am Luftspalt in Radialebenen angeordnete, von Spulen erregbare Pole des Ständers gegenüber. Beim Erregen der Spulen bilden sich im Luftspalt elektrische Felder aus, die auf den Läufer ein Drehmoment ausüben.

Diese Konstruktion ist aufwendig, da sie zusätzlich zum Lüfterrad Permanentmagnete benötigt. Prinzipbedingt muß für die Bestromung der Spulen die Position des Lüfterrades detektiert werden. Die Verwendung der Permanentmagnete in der gezeigten Form begrenzt zudem die maximale Drehzahl und die Temperatur auf Werte, die das Einsatzgebiet einschränken.

Aus der DE-OS 14 28 061 ist ein Radialgebläse bekannt, dessen Ständer und Läufer aus gewickelten Blechpaketen bestehen. Das Läuferblechpaket ist genutet und hat in den Nuten eine geschlossene Kurzschlußwicklung. Das Ständerblechpaket hat offene Nuten, in die die Erregerwicklung eingelegt ist. Läufer und Ständer bilden breite Scheiben, die zwischen sich einen radialen Lulftspalt einschließen. Der Läufer hat eine Tragscheibe, die auf der einen Seite das Läuferblechpaket mit der Kurzschlußwicklung und auf der anderen Seite die Gebläselamellen trägt.

Der Läufer dieses Gebläseaggregates ist aufwendig gestaltet und benötigt in axialer Richtung viel Platz.

Aus der GB 14 21 770 ist ein Gebläseaggregat bekannt, bei dem der aktive Läuferteil eine leitfähige Scheibe ist, die an ihrem Rand Läuferflügel trägt. Damit wird Platz geschaffen für zwei unterschiedlich bewickelte Ständerteile, die unter Ausbildung von zwei Luftspalten beiden Scheibenstirnflächen gegenüberliegen.

Zwei unterschiedlich ausgebildete Ständerteile und deren Anordnung sind aufwendig. Die außen gelegenen Läuferflügel stehen einer Miniaturisierung hindernd im Wege.

Da bei Staubsaugern die aufgenommene Leistung heute noch ein typisches Indiz für die Wirksamkeit des Staubsaugers ist, werden in Staubsaugern bedingt effiziente Komplett-Motoren eingesetzt, die ein ebenfalls komplettes, aufgeflanschtes Verdichter-Laufrad antreiben. Das Einbauvolumen eines derartigen Aggregates aus Verdichter und Motor ist relativ groß.

In letzter Zeit gehen die Hersteller dazu über, außer der Leistungsaufnahme des Gerätes auch dessen Saugleistung an der Düse anzugeben. Dabei stehen die Hersteller dann vor dem Problem, daß der schlechte Wirkungsgrad der Aggregate zutage tritt. Dies ist besonders von Bedeutung bei batteriegetriebenen Geräten.

Nachteilig ist bei den gebräuchlichen Staubsaugern auch, daß der getrennte Aufbau von Verdichter und Motor einer Miniaturisierung des Gerätes entgegensteht. Bei einer Drehzahl der bekannten Staubsaugermotoren in der Größerordnung von 25000 U/min gibt es eine deutliche Geräuschentwicklung, die wesentlich von den Bürsten der verwendeten Universalmotoren verursacht wird. Der schlechte Wirkungsgrad der heute eingesetzten Aggregate führt zu einer starken Motorerwärmung. Um diese Verlustwärme abzuführen, wird der Saugluftstrom durch den Motor oder über den Motor hinweg geführt. Dies führt zu zusätzlichen Strömungsgeräuschen und Strömungsverlusten.

Es ist Aufgabe der Erfindung, ein Gebläseaggregat für einen Staubsauger zu schaffen, das geräuschärmer und effizienter arbeitet und das darüber hinaus miniaturisierbar ist.

Die gestellte Aufgabe ist gemäß der Erfindung gelöst durch die Kombination folgender, teilweise bekannter Merkmale:
1) der Antrieb besteht aus einem elektromagnetischen Ständer und einem elektromagnetisch wirksamen Verdichterlaufrad mit einem radialen Luftspalt zwischen dem Ständer und dem Verdichterlaufrad,
2) das Verdichterlaufrad weist am Luftspalt eine leitfähige Basisplatte auf, die an der vom Luftspalt abgelegenen Radialfläche die Lüfterflügel trägt und die mit der luftspaltseitigen Radialfläche am Luftspalt den Ständerpolen gegenüberliegt,
3) die an den Luftspalt angrenzenden, der Radialfläche gegenüberliegenden Ständerpole (18) sind aus einer radialen Endfläche einer Eisenhülse herausgearbeitet durch das Vorsehen von radial angebrachten Nuten, in die Spulen gewickelt sind,
4) der als Axialflußmotor wirkende Antrieb wird mittels eines Frequenzumrichters gespeist, wobei die Drehzahlstellung von prozeßabhängigen Sollwerten und einstellbaren Stellgrößen abgeleitet wird.

Bei einem derartigen Aggregat kann das Verdichter-Laufrad auf übliche Weise gelagert werden, und das Laufrad selbst kann, wie bisher, durch leitfähige Radialplatten axial begrenzt werden. Funktional unterschiedlich ist, daß die am Luftspalt befindliche Radialfläche der Basisplatte des Lüfterrades als Wirbelstromplatte des Axialfluß-Induktionsmotors wirkt, wobei der Wirbelstrom von den Polflächen des Ständers erzeugt wird. Der Ständer als ortsfestes Teil kann mit der Lagerhalterung für das Verdichter-Laufrad kombiniert sein. Auf diese Weise läßt sich das Antriebsaggregat eines Staubsaugers deutlich miniaturisieren.

Da mittels des Frequenzumrichters die Drehzahlstellung von prozeßabhängigen Sollwerten und einstellbaren Stellgrößen abgeleitet wird und der mechanische Kommutator fehlt, läßt sich die Motordrehzahl erheblich steigern. Die Stellmöglichkeiten der Drehzahl erlauben, die Saugleistung optimal dem Bedarf anzupassen. Darüber hinaus kann mittels zusätzlicher Drucksensoren eine Regelung realisiert werden. Der Wirkungsgrad des Antriebes steigt, eine aufwendige Kühlung kann entfallen. Die Geräuschentwicklung ist abgesenkt.

Die Eisenhülse kann aus einem Eisenbandwickel bestehen, die mit von einer Bandseite her eingeprägten Nuten exakt gewickelt ist, so daß Schwierigkeiten bei der Nutung nach Herstellung des Wickels entfallen. Wenn das Verdichterlaufrad aus der Basisplatte und einer dazu parallelen Platte besteht, zwischen denen die Lüfterflügel angeordnet sind, kann ein Läufer bisheriger Bauart entfallen.

Die elektrisch leitfähige Platte des Läufers wird vorzugsweise aus Aluminium bestehen und wird auf ihrer vom Luftspalt abgelegenen Seitenfläche mit einer Platte aus hochpermeablem Werkstoff hinterlegt. Als hochpermeabler Werkstoff wird dabei Eisen verwendet.

Da in dieser Platte Wirbelströme entstehen können, wird zur Wirbelstromunterdrückung der magnetisch leitfähig ausgebildete Teil der Platte aus einem gewickelten Elektroblechband gefertigt. Die Leistungsfähigkeit des Motors wird dadurch weiter verbessert.

Die Basisplatte des Verdichterlaufrades kann aus massivem Eisen bestehen. Bei einer solchen Platte sind elektrische und magnetische Leitfähigkeit verbunden.

Eine weitere Verbesserung der Motorleistung ist auch dadurch möglich, daß die äußeren und inneren Ränder der kreisringförmigen, massiv eisernen Basisplatte des Laufrades mit Teilen aus hochleitfähigem Werkstoff in Kontakt stehen, wobei diese Teile aus hochleitfähigem Werkstoff als Kupferringe ausgebildet sein können.

Nach einer weiteren Ausgestaltung der Erfindung ist vorgesehen, daß die Stellgrößen die Primärfrequenz und der Statorstrom oder die Statorspannung sind. Ebenso ist nach einer weiteren Ausgestaltung vorgesehen, daß der Drehzahl-Istwert eine Meßgröße ist oder aus elektrischen Größen des Motors ermittelt wird. Durch eine derartige Auswertung der Funktionsabläufe innerhalb des Axialfluß-Induktionsmotors kann auf mechanische oder elektrische Fühler verzichtet werden.

Nach einer weiteren Ausgestaltung der Erfindung ist vorgesehen, daß die Arbeitsdrehzahl des Turbinenrades auf 25000 - 50000 U/min eingestellt ist. Die hohe Arbeitsdrehzahl bietet die Möglichkeit, den Turbinenwirkungsgrad zu steigern.

Die Erfindung wird anhand der Zeichnung näher erläutert. Es zeigen:
Fig. 1 ein Gebläseaggregat mit einem Verdichterlaufrad, das zugleich Läufer eines Axialfluß-Induktionsmotors ist, und den zugehörigen Stator schaubildlich in Explosionsansicht,
Fig. 2a ein Schnittbild durch das Gebläseaggregat
Fig. 2b eine Vorderansicht des unbewickelten Statorblechpaketes,
Fig. 3 ein Blockschaltbild der Speisung und Steuerung des Axialfluß-Induktionsmotors in dem Gebläseaggregat nach Fig 1.

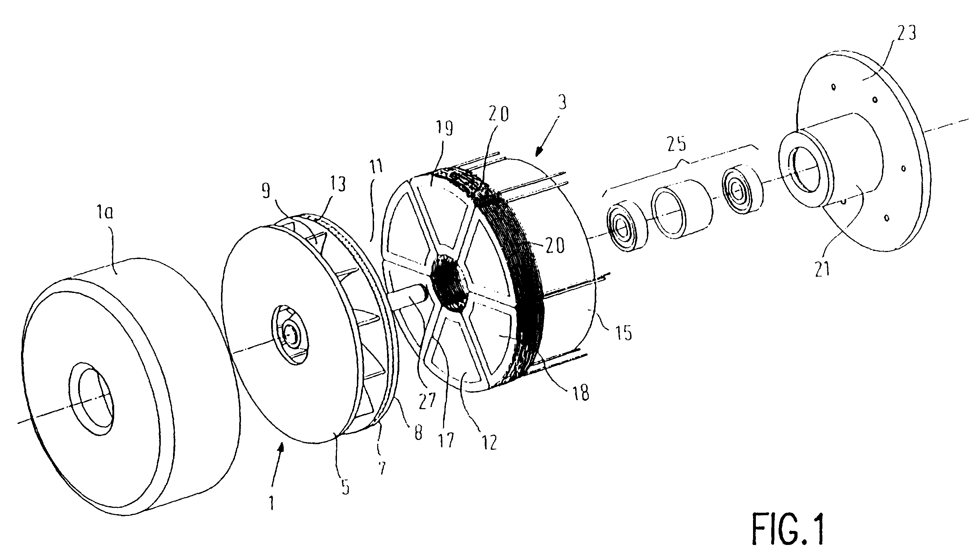

Das in Fig. 1 in Explosionsansicht dargestellte Gebläseaggregat besteht aus einem Verdichterlaufrad 1 mit einem Gehäuse 1a und einem Ständer 3 eines Axialfluß-Induktionsmotors 4. Das Verdichterlaufrad 1 besteht im dargestellten Ausführungsbeispiel aus zwei parallelen Aluminiumscheiben 5 und 7, zwischen denen sich Lüfterflügel 9 befinden. Die Aluminiumscheibe 7 wird als Wirbelstromrotor des Axialfluß-Induktionsmotors eingesetzt, zu dem der Ständer 3 gehört. Die als Basisplatte des Verdichterlaufrades 1 wirkende Scheibe 7 liegt deshalb bei in Betriebslage befindlichem Verdichterlaufrad 1 und Ständer 3 mit einer Radialfläche 8 am Luftspalt 11 des Axialfluß-Induktionsmotors.

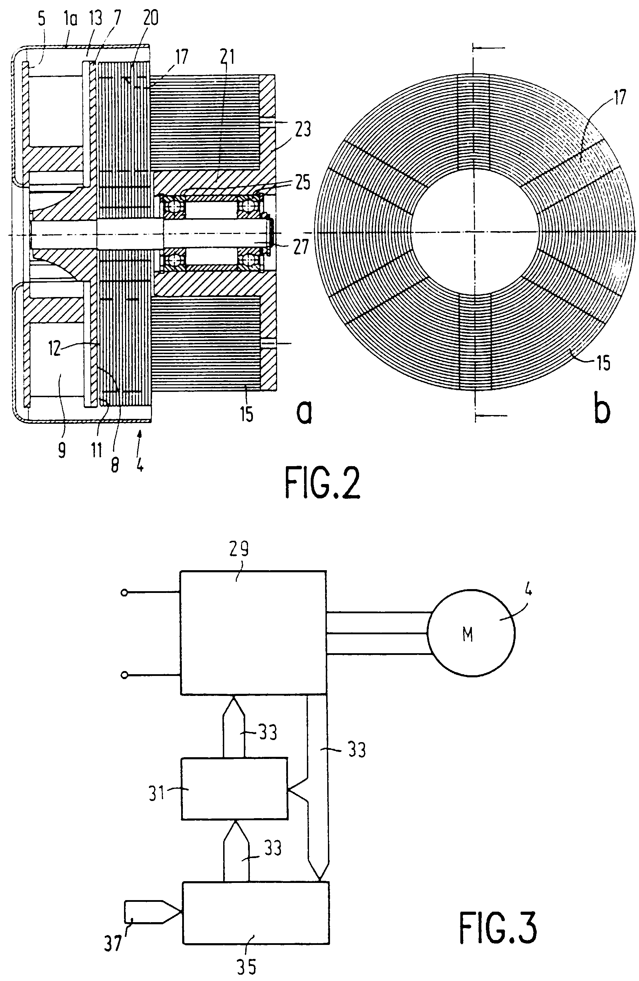

Bei dem Ausführungsbeispiel nach Fig. 1, 2a und 2b ist die Scheibe 7 auf ihrer vom Luftspalt 11 abgelegenen Seiten fläche mit einer Platte 13 aus hochpermeablem Werkstoff, vorzugsweise aus massivem Eisen oder aus gewickeltem Elektroblech hinterlegt. Damit weist das Verdichterlaufrad am Luftspalt 11 eine elektrisch leitfähige Schicht 7 und dahinter eine magnetisch leitfähige Schicht 13 auf. Die magnetisch leitfähige Schicht bildet dabei die Platte 13 aus massivem Eisen. Zur Wirbelstromunterdrückung ist es aber auch möglich, die Scheibe 13 aus einem aufgewickelten Elektroblechband zu bilden.

Bei einem nicht dargestellten Ausführungsbeispiel ist auf die Aluminiumscheibe 7 verzichtet. Die massiveiserne Scheibe 13 ist dann als Sekundärteil für den Motor wirksam. Die so entstandene Ausführungsform kann noch modifiziert werden, indem die äußeren und inneren Ränder der kreisförmigen, massiveisernen Eisenplatte 13 mit nicht dargestellten Kupferringen kontaktiert sind. Dadurch wird der elektrisch wirksame Sekundärwiderstand reduziert.

Der Stator 3 besteht aus einer Eisenhülse 15 (Fig. 2a und 2b), die durch Wickeln eines Elektroblechstreifens gebildet ist. Von einer am Luftspalt 11 liegenden radialen Endfläche 12 her sind in die Hülse Nuten 17 eingebracht, die zwischen sich Ständerpole 18 ausbilden. Diese Ständerpole 18 enden am Luftspalt 11 mit radialen Polflächen 19. Bei dem Ausführungsbeispiel sind sechs Spulen 20 in sechs Nuten 17 eingelegt. Die Spulen 20 werden zu einer ein- oder mehrsträngigen Wicklung verschaltet. Auch andere als die dargestellte Wicklung können ausgeführt werden. Darüber hinaus kann leistungsabhängig auch eine andere Nutenzahl verwendet werden, mit dann angepaßter Wicklungsausführung.

Die Eisenhülse 15 ist auf eine Traghülse 21 einer Sockel platte 23 aufgesetzt. In der Traghülse 21 befindet sich ein Lager 25 für eine Laufradwelle 27.

Fig. 3 zeigt eine Steuerung für den Axialfluß-Induktionsmotor 4 nach Fig. 1. Es ist ein Frequenzumrichter 29 vorgesehen, der die Wicklung des Motors 4 speist. Die Drehzahlstellung wird dabei von prozeßabhängigen Sollwerten und einstellbaren Stellgrößen abgeleitet. Es ist ein Signalformer 31 vorgesehen, der Stell- oder Istgrößen in Form der Primärfrequenz sowie des Statorstromes oder der Statorspannung über Leitungen 33 zugeführt erhält.

Weiterhin ist es möglich, eine Drehzahlstellung und/oder eine Leistungsstellung von prozeßabhängigen Sollwerten und Stellgrößen abzuleiten. Im Prozeßregler 35 können Istwerte, z. B. für Drehzahl und Saugleistung, aus elektrischen Größen ermittelt werden. Der Drehzahl-Sollwert kann am Prozeßregler 35 beispielsweise mittels eines von Hand bedienbaren Stellgliedes 37 vorgegeben werden; auch kann er von einem Prozeßsensor abgeleitet werden.

## Patentansprüche

1. Gebläseaggregat mit elektrischem Antrieb zur Verwendung in einem Staubsauger, bestehend aus der Kombination folgender Merkmale:
1) der Antrieb besteht aus einem elektromagnetischen Ständer (3) und einem elektromagnetisch wirksamen Verdichterlaufrad (1) mit einem radialen Luftspalt zwischen dem Ständer (3) und dem Verdichterlaufrad (1),
2) das Verdichterlaufrad (1) weist am Luftspalt eine leitfähige Basisplatte (7, 13) auf, die an der vom Luftspalt abgelegenen Radialfläche die Lüfterflügel (9) trägt und die mit der luftspaltseitigen Radialfläche (8) am Luftspalt (11) den Ständerpolen (18) gegenüberliegt,
3) die an den Luftspalt (11) angrenzenden, der Radialfläche (8) gegenüberliegenden Ständerpole (18) sind aus einer radialen Endfläche (12) einer Eisenhülse (15) herausgearbeitet durch das Vorsehen von radial angebrachten Nuten (17), in die Spulen (20) gewickelt sind,
4) der als Axialflußmotor (4) wirkende Antrieb wird mittels eines Frequenzumrichters (29) gespeist, wobei die Drehzahlstellung von prozeßabhängigen Sollwerten und einstellbaren Stellgrößen abgeleitet wird.

2. Gebläseaggregat nach Anspruch 1, dadurch gekennzeichnet, daß die Stellgrößen die Primärfrequenz und der Statorstrom oder die Statorspannung sind.

3. Gebläseaggregat nach Anspruch 2, dadurch gekennzeichnet, daß der Drehzahl-Istwert eine Meßgröße ist oder aus elektrischen Größen ermittelt wird.

4. Gebläseaggregat nach einem oder mehreren der Ansprüche 1 bis 3, dadurch gekennzeichnet, daß die Arbeitsdrehzahl des Turbinenrades auf 25000 - 50000 U/min eingestellt ist.

## Claims

1. An electrically driven fan unit for use in a vacuum cleaner, characterised in that
1.) the driving mechanism is composed of an electromagnetic stator (3) and an electromagnetically active impeller wheel (1) having a radial air gap between the stator (3) and the impeller wheel (1),
2) the impeller wheel (1) has a conductive basic disc (7, 13) adjacent the air gap, which basic disc carries the impeller vanes (9) at the side of the radial surface facing away from said air gap and is situated opposite the stator poles (18) at the side of the radial surface (8) facing the air gap (11),
3) the stator poles (18) which are adjacent the air gap (11) and opposite the radial surface (8) are formed from a radial end face (15) of an iron cylinder by the provision of radial slots (17) in which coils (20) are arranged,
4) the axial-flow motor (4) which serves as the driving mechanism is energised by means of a frequency changer (29), the speed setting being derived from process-dependent nominal values and adjustable set-point values.

2. A fan unit as claimed in Claim 1, characterised in that the set-point values are the primary frequency and the stator current or the stator voltage.

3. A fan unit as claimed in Claim 2, characterised in that the actual speed value is a measurement value or is derived from electrical parameters.

4. A fan unit as claimed in any one of Claims 1 to 3, characterised in that, the operating speed of the turbine wheel is set at 25,000 - 50,000 r.p.m.

## Revendications

1. Bloc de turbine avec entraînement électrique à mettre en oeuvre dans un aspirateur et composé de la combinaison des propriétés suivantes :
1) l'entraînement se compose d'un stator électromagnétique (3) et d'un rotor de turbine à action électromagnétique (1) avec un entrefer radial entre le stator (3) et le rotor de turbine (1),
2) le rotor de turbine (1) présente sur l'entrefer une plaque de base conductrice (7, 13) qui porte les ailes de turbine (9) sur sa face radiale opposée (8) à l'entrefer et qui est opposée sur l'entrefer (11) aux pôles du stator (18) avec la surface radiale côté entrefer,
3) les pôles du stator (18) opposés à la surface radiale (8) et adjacents à l'entrefer (11) sont composés d'une surface d'extrémité radiale (12) d'une gaine en fer (15) en prévoyant des rainures (17) disposées radialement dans lesquelles des bobines (20) sont enroulées,
4) l'entraînement faisant office de moteur à flux axial (4) est alimenté à l'aide d'un convertisseur de fréquence (29), le réglage de la vitesse de rotation étant dérivé de valeurs de consigne dépendant du processus et de variables réglables.

2. Bloc de turbine selon la revendication 1, caractérisé en ce que les variables sont la fréquence primaire et le courant ou la tension du stator.

3. Bloc de turbine selon la revendication 2, caractérisé en ce que la valeur réelle de la vitesse de rotation est une grandeur de mesure ou est déterminée à partir de grandeurs électriques.

4. Bloc de turbine selon l'une ou plusieurs des revendications 1 à 3, caractérisé en ce que la vitesse de travail de la roue de turbine est réglée à 25000-50000 tr/min.
